# EUROPEAN PATENT APPLICATION

(11) **EP 4 737 840 A1**
(43) Date of publication of application: **06.05.2026**
(21) Application number: 24209366.4
(22) Date of filing: 29.10.2024
(51) Int. Cl.: F28D 1/053, F28F 9/02, H01M 10/613, H01M 10/625, H01M 10/6556

(54) **CONNECTOR FOR FLUIDICALLY CONNECTING AN INTER-CELL COOLANT CHANNEL TO A PIPING SYSTEM OF A BATTERY COOLING SYSTEM FOR A VEHICLE, COOLING ASSEMBLY FOR A BATTERY COOLING SYSTEM FOR A VEHICLE, BATTERY ASSEMBLY, AND VEHICLE**

(71) Applicant: Volvo Car Corporation, 405 31 Göteborg (SE)
(72) Inventor: KARLSSON, Daniel, 40531 Göteborg (SE); PERSSON, Klas, 40531 Göteborg (SE)
(74) Representative: Kransell & Wennborg KB

(57) **Abstract**

The disclosure relates to a connector (30) for fluidically connecting an inter-cell coolant channel (24) to a piping system (50) of a battery cooling system (20) for a vehicle. The connector (30) comprises a connection interface (32) for fluidically connecting the connector (30) to the inter-cell coolant channel (24), an inlet port (38) for supplying coolant to the connector (30), and an outlet port (42) for discharging coolant from the connector (30). The inlet port (38) is fluidically connected to the connection interface (32). The outlet port (42) is fluidically connected to the connection interface (32). The inlet port (38) and the outlet port (42) are arranged on a same side of the connector (30). Additionally, a cooling assembly (22) for a battery cooling system (20) for a vehicle is described. Furthermore, a battery assembly (16) for a vehicle is shown. Also, a vehicle is presented.

## Description

### TECHNICAL FIELD

The present disclosure relates to a connector for fluidically connecting an inter-cell coolant channel to a piping system of a battery cooling system for a vehicle.

Moreover, the present disclosure is directed to a cooling assembly for a battery cooling system for a vehicle.

Additionally, the present disclosure relates to a battery assembly for a vehicle.

Furthermore, the present disclosure is directed to a vehicle.

### BACKGROUND ART

The recent advancement in the field of battery electric vehicles show that the energy density in battery systems increases. Increased energy densities lead to increased temperatures of the battery cells in battery systems during charging and discharging. Thus, cooling means are often used to cool the battery systems. Typically, these cooling means comprise a complex design and need a certain space that cannot be used otherwise.

### SUMMARY

Consequently, it is an objective of the present disclosure to reduce the complexity, while maintaining or reducing the overall size of cooling assemblies for battery assemblies of vehicles.

The problem is at least partially solved or alleviated by the subject matter of the independent claims of the present disclosure, wherein further examples are incorporated in the dependent claims.

According to a first aspect, there is provided a connector for fluidically connecting an inter-cell coolant channel to a piping system of a battery cooling system for a vehicle. The connector comprises:
- a connection interface for fluidically connecting the connector to the inter-cell coolant channel,
- an inlet port for supplying coolant to the connector, wherein the inlet port is fluidically connected to the connection interface, and
- an outlet port for discharging coolant from the connector, wherein the outlet port is fluidically connected to the connection interface,
wherein the inlet port and the outlet port are arranged on a same side of the connector.

A connector may be understood as connecting means to securely couple the inter-cell coolant channel to the piping system. The coupling is understood as fluidic coupling such that a liquid, e.g. a coolant, may be transferred between the inter-cell coolant channel and the piping system. The inter-cell coolant channel may be seen as at least one channel extending between a plurality of battery cells. This has the effect that the heat generated by the battery cells may be withdrawn via the inter-cell coolant channel. The piping system may be understood as a combination of a supply means and a discharge means such that a coolant can be supplied to the connector using the piping system and such that the coolant can be discharged or withdrawn from the connector. The term "fluidically connecting" or "fluidically connected" means that a connection between the connector and the inter-cell coolant channel is configured such that a coolant can flow from the connector to the inter-cell coolant channel and vice versa. Such coolant or cooling agent may be a liquid, e.g. a water-based coolant, or a gas. This meaning of "fluidically connecting" or "fluidically connected" also applies to the inlet port being fluidically connected to the connection interface and to the outlet port being fluidically connected to the connection interface. The term "port" may be understood as an element or portion for intake or exhaust of the coolant. Therefore, the inlet port may enable a controlled and reliable supply of the coolant to the connector and, thus, to the inter-cell coolant channel. Correspondingly, the outlet port may enable a controlled and reliable discharge of the coolant from the connector and, thus, from the inter-cell coolant channel. This has the effect that a temperature of the connector and, thus, of the inter-cell coolant channel may be controlled efficiently. Arranging the inlet port and the outlet port on the same side of the connector means that only on one side of the connector the inlet port and the outlet port are arranged on. This has the effect that only one side of the connector comprises both ports such that the coolant may enter and/or exit the connector and, thus, the inter-cell coolant channel on this side. This configuration may allow the inlet port and the outlet port to be arranged in a space-saving manner on the connector. This may reduce the overall size of the connector. It is to be noted that due to the fact that the inlet port and the outlet port are arranged on the same side of the connector, also the connection between the piping system and the connector is facilitated. This is due to the fact that both the inlet port and the outlet port are well accessible. Moreover, no further complex components are needed, and the complexity may also be reduced.

According to an example, the inlet port is fluidically connected to the connection interface via an inlet chamber. Additionally or alternatively, the outlet port is fluidically connected to the connection interface via an outlet chamber. This means that there are three alternatives. The first alternative describes the case, in which the inlet port is fluidically connected to the connection interface via an inlet chamber and the outlet port is fluidically connected to the connection interface via an outlet chamber. It is to be noted that the inlet chamber and the outlet chamber need to be separated. Such separation may be achieved by using a separation wall. In other words, the connector may further comprise a separation wall that is configured to separate the inlet chamber from the outlet chamber. The second alternative describes the case, in which the inlet port is fluidically connected to the connection interface via an inlet chamber. The third alternative describes the case, in which the outlet port is fluidically connected to the connection interface via an outlet chamber. The outlet chamber may prevent a backflow of the coolant in case the coolant is supplied to the inlet port and a pressure with which the coolant is supplied varies. By using an outlet chamber, a directed flow of the coolant is facilitated, preventing it from flowing back into the connection interface. Such a backflow may destabilize the temperature control of the battery cooling system. Thus, the overall efficiency and reliability of the connector may be improved. It is further noted that the inlet chamber and/or the outlet chamber may reduce pressure losses within the connector. This is because the inlet chamber and/or the outlet chamber may be designed such that the inlet chamber and/or the outlet chamber may optimize the flow of the coolant and reduce the risk of flow turbulences. Lower pressure losses may lead to less energy that is required to move the coolant through the connector. This may further increase the efficiency of the connector.

According to an example, a largest cross section of the inlet chamber is larger than a cross section of the inlet port. Additionally or alternatively, a largest cross section of the outlet chamber is larger than a cross section of the outlet port. The cross section may be measured perpendicularly to the direction of flow. The larger cross section of the inlet chamber compared to the inlet port may provide a reduced flow velocity of the coolant, in case the coolant is supplied to the inlet port. The larger cross section of the inlet chamber decreases the flow velocity of the coolant upon entering the inlet chamber. This may reduce turbulences and pressure losses in the connector. Further, the larger cross section of the inlet chamber may allow a better distribution of the coolant. In this context, better may be understood as more evenly or more equally. This may lead to a more efficient temperature transfer through the connector. The larger cross section of the outlet chamber compared to the outlet port may provide an improved pressure distribution. In this context, pressure distribution may also be seen as a pressure equalization. The larger cross section of the outlet chamber may serve as a buffer area such that the pressure of the coolant may be stabilized before the coolant discharges from the outlet port. This enables a more consistent, reliable and controlled discharge of the coolant from the connector. Further, the larger cross section of the outlet chamber may allow an improved flow of the coolant, wherein the coolant may flow with a decreased velocity through the outlet chamber. This may lead to reduced turbulences in the outlet chamber such that the efficiency of the connector may be further improved.

According to an example, the inlet chamber has a conical shape or a wedged shape. Additionally or alternatively, the outlet chamber has a conical shape or a wedged shape. A conical shape may be understood in that the inlet chamber and/or the outlet chamber has a shape of a cone. A wedged shape may be understood in that the inlet chamber and/or the outlet chamber has a shape of a wedge. In other words and in this context, the inlet chamber and/or the outlet chamber may comprise at least a portion that tapers. The inlet chamber having a conical shape or a wedged shape allows for smoothly transitioning a cross section from the inlet port to the connection interface. This may lead to a more evenly distributed flow of the coolant. Therefore, the flow efficiency of the coolant may be improved because turbulences may be reduced. The outlet chamber having a conical shape or a wedged shape allows for smoothly transitioning a cross section from the connection interface to the outlet chamber. This may further help dissipating the pressure of the coolant more evenly. Thus, the outlet chamber may enable a more controlled and more efficient discharge of the coolant from the connector. Additionally, the inlet chamber and/or the outlet chamber having a conical shape or a wedged shape may increase the structural integrity and stability of the connector because external loads may be reliably supported.

According to an example, the connector further comprises an outer surface portion extending between the inlet port and the outlet port. The outer surface portion comprises a depression. This configuration liberates space external to the connector and adjacent to the depression. This space can be used for other components of the battery cooling system or, more generally, the battery system, in which the connector is used. In an example, one or more electric connectors, e.g. busbars, may be at least partially arranged in the depression. Thus, the depression facilitates a busbar connection. Further, shorter busbars can be used. Moreover, providing a depression on the outer surface portion may imply a protrusion on an inside of the connector. This protrusion may serve as a separation between inlet chamber and outlet chamber. This is means that a separation wall separating the inlet chamber and the outlet chamber can be made smaller or even completely eliminated. Altogether, a design of the connector is simplified.

According to an example, the inlet port has an inlet port middle axis, the connection interface has a connection interface middle axis, and the inlet port middle axis and the connection interface middle axis enclose an angle of 45° or less. Additionally or alternatively, the outlet port has an outlet port middle axis, the connection interface has a connection interface middle axis, and the outlet port middle axis and the connection interface middle axis enclose an angle of 45° or less. This means that there are three alternatives. The first alternative describes the case, in which the inlet port has an inlet port middle axis, the connection interface has a connection interface middle axis, and the inlet port middle axis and the connection interface middle axis enclose an angle of 45° or less, and the outlet port has an outlet port middle axis, the connection interface has a connection interface middle axis, and the outlet port middle axis and the connection interface middle axis enclose an angle of 45° or less. The second alternative describes the case, in which the inlet port has an inlet port middle axis, the connection interface has a connection interface middle axis, and the inlet port middle axis and the connection interface middle axis enclose an angle of 45° or less. The third alternative describes the case, in which the outlet port has an outlet port middle axis, the connection interface has a connection interface middle axis, and the outlet port middle axis and the connection interface middle axis enclose an angle of 45° or less. The angle of 45° or less between the outlet port middle axis and the connection interface middle axis and/or between the inlet port middle axis and the connection interface middle axis may lead to a more efficient and direct flow of the coolant. In simplified words, the flow of coolant does not need to do significant turns. Thus, the flow of the coolant may be further improved and turbulences of the flow may be further reduced. Further, such an angle of 45° or less may enable a design of the connector in a more compact manner such that overall space may be reduced. Additionally, the positioning of the inlet port and the outlet port may be more flexible and well accessible for connecting a piping system.

According to an example, the inlet port middle axis and the connection interface middle axis enclose an angle of 30° or less. Additionally or alternatively, the outlet port middle axis and the connection interface middle axis enclose an angle of 30° or less. This means that there are again three alternatives. The first alternative describes the case, in which the inlet port middle axis and the connection interface middle axis enclose an angle of 30° or less and the outlet port middle axis and the connection interface middle axis enclose an angle of 30° or less. The second alternative describes the case, in which the inlet port middle axis and the connection interface middle axis enclose an angle of 30° or less. The third alternative describes the case, in which the outlet port middle axis and the connection interface middle axis enclose an angle of 30° or less. The angle of 30° or less between the outlet port middle axis and the connection interface middle axis and/or between the inlet port middle axis and the connection interface middle axis may lead to an even more efficient and direct flow of the coolant. In simplified words, the flow of coolant needs to turn to an even smaller extent. Thus, the flow of the coolant may be even further improved and turbulences of the flow may be further reduced. Further, such an angle of 30° or less may enable a design of the connector in an even more compact manner such that overall space may be reduced. Additionally, the positioning of the inlet port and the outlet port may be even more flexible and well accessible for connecting a piping system.

According to an example, the inlet port middle axis and the connection interface middle axis extend in parallel. Additionally or alternatively, the outlet port middle axis and the connection interface middle axis extend in parallel. This means that there are three alternatives. The first alternative describes the case, in which the inlet port middle axis and the connection interface middle axis extend in parallel and the outlet port middle axis and the connection interface middle axis extend in parallel. The second alternative describes the case, in which the inlet port middle axis and the connection interface middle axis extend in parallel. The third alternative describes the case, in which the outlet port middle axis and the connection interface middle axis extend in parallel. The outlet port middle axis and the connection interface middle axis and/or the inlet port middle axis and the connection interface middle axis extending in parallel may lead to an even more efficient and direct flow of the coolant. In other words, the flow of coolant may be guided through the connector along a substantially straight path. Thus, the flow of the coolant may be even further improved and turbulences of the flow may be further reduced. Further, such arrangement in parallel may enable a design of the connector in an even more compact manner such that overall space may be reduced. Moreover, the inlet port and the outlet port are particularly well accessible for connecting a piping system.

According to an example, the connection interface comprises a slot-shaped opening for receiving an end portion of the inter-cell coolant channel. In this context, a slot-shaped opening may be seen as a narrow opening or passage, or as a groove. Such a slot-shaped opening may facilitate assembling the connector and the inter-cell coolant channel. This is because the slot-shaped opening may allow an easy and flexible assembling by positioning the connector to the inter-cell coolant channel. The connection interface may as well be designated as a pocket configured to receive an end of the inter-cell coolant channel.

According to an example, a width of the connector extends perpendicularly to a principal extension of the slot-shaped opening and in parallel to a width of the slot-shaped opening. A largest width of the connector is smaller than 50mm. The largest width of the connector being smaller than 50mm has the effect that the connector is compact. Thus, the overall space required by the connector is small. Further, the largest width of the connector being smaller than 50mm may lead to less material consumption and, therefore, to less weight. This means that the weight of the connector may be further reduced. Moreover, this configuration facilitates the arrangement of a plurality of connectors associated with adjacent rows of battery cells and/or adjacent inter-cell coolant channels.

In an example, the connector comprises metal material. In more detail, the connector may comprise aluminum material. Thus, the weight of the connector may be further reduced. The connector may be produced from aluminum material in a casting process.

According to a second aspect, there is provided a cooling assembly for a battery cooling system for a vehicle. The cooling assembly comprises:
- a connector of the first aspect, and
- an inter-cell coolant channel, wherein the inter-cell coolant channel is fluidically connected to the connection interface of the connector.

In this context, the cooling assembly may be understood in that it serves as a cooling means to control the temperature of at least a portion of a battery assembly. As a coolant may flow through the inter-cell coolant channel, the inter-cell coolant channel may allow an efficient dissipation of heat away from other components, e.g. battery cells. Since the inter-cell coolant channel and the connection interface of the connector are fluidically connected, the coolant may carry away the heat from the other components, e.g. battery cells, in an efficient manner. Furthermore, due to the direct fluidic connection, the number of interfaces through which coolant carrying the heat must be transferred may be reduced such that the overall efficiency of the cooling assembly may be increased.

In an example, the inter-cell coolant channel comprises a cooling body and at least one channel provided therein. The channel is configured to guide the coolant. The channel is arranged inside the cooling body. The cooling body comprises at least one opening such that the connection interface of the connector may be fluidically connected to the cooling body. This has the effect that the coolant may flow through the connector and the inter-cell coolant channel.

According to an example, the inlet port has an inlet port middle axis, the inter-cell coolant channel has a direction of principal extension, and the inlet port middle axis and the direction of principal extension enclose an angle of 45° or less. Additionally or alternatively the outlet port has an outlet port middle axis, the inter-cell coolant channel has a direction of principal extension, and the outlet port middle axis and the direction of principal extension enclose an angle of 45° or less. This means that there are three alternatives. The first alternative describes the case, in which the inlet port has an inlet port middle axis, the inter-cell coolant channel has a direction of principal extension, and the inlet port middle axis and the direction of principal extension enclose an angle of 45° or less, and the outlet port has an outlet port middle axis, the inter-cell coolant channel has a direction of principal extension, and the outlet port middle axis and the direction of principal extension enclose an angle of 45° or less. The second alternative describes the case, in which the inlet port has an inlet port middle axis, the inter-cell coolant channel has a direction of principal extension, and the inlet port middle axis and the direction of principal extension enclose an angle of 45° or less. The third alternative describes the case, in which the outlet port has an outlet port middle axis, the inter-cell coolant channel has a direction of principal extension, and the outlet port middle axis and the direction of principal extension enclose an angle of 45° or less. The angle of 45° or less between the outlet port middle axis and the direction of principal extension and/or between the inlet port middle axis and the direction of principal extension may lead to a more efficient and direct flow of the coolant. In simplified words, the flow of coolant does not need to do significant turns. Thus, the flow of the coolant may be further improved and turbulences of the flow may be further reduced. Further, such an angle of 45° or less may enable a design of the cooling assembly in a more compact manner such that overall space may be reduced. Additionally, the positioning of the inlet port and the outlet port may be more flexible and well accessible for connecting a piping system.

In an example, the inlet port middle axis and the direction of principal extension enclose an angle of 30° or less. Additionally or alternatively, the outlet port middle axis and the direction of principal extension enclose an angle of 30° or less. This means that there are again three alternatives. The first alternative describes the case, in which the inlet port middle axis and the direction of principal extension enclose an angle of 30° or less and the outlet port middle axis and the direction of principal extension enclose an angle of 30° or less. The second alternative describes the case, in which the inlet port middle axis and the direction of principal extension enclose an angle of 30° or less. The third alternative describes the case, in which the outlet port middle axis and the direction of principal extension enclose an angle of 30° or less. The angle of 30° or less between the outlet port middle axis and the direction of principal extension and/or between the inlet port middle axis and the direction of principal extension may lead to an even more efficient and direct flow of the coolant. In simplified words, the flow of coolant needs to turn to an even smaller extent. Thus, the flow of the coolant may be even further improved and turbulences of the flow may be further reduced. Further, such an angle of 30° or less may enable a design of the cooling assembly in an even more compact manner such that overall space may be reduced. Additionally, the positioning of the inlet port and the outlet port may be even more flexible and well accessible for connecting a piping system.

According to an example, the inlet port middle axis and the direction of principal extension extend in parallel. Additionally or alternatively, the outlet port middle axis and the direction of principal extension extend in parallel. This means that there are three alternatives. The first alternative describes the case, in which the inlet port middle axis and the direction of principal extension extend in parallel and the outlet port middle axis and the direction of principal extension extend in parallel. The second alternative describes the case, in which the inlet port middle axis and the direction of principal extension extend in parallel. The third alternative describes the case, in which the outlet port middle axis and the direction of principal extension extend in parallel. The outlet port middle axis and the direction of principal extension and/or the inlet port middle axis and the direction of principal extension extending in parallel may lead to an even more efficient and direct flow of the coolant. In other words, the flow of coolant may be guided through the connector along a substantially straight path. Thus, the flow of the coolant may be even further improved and turbulences of the flow may be further reduced. Further, such arrangement in parallel may enable a design of the cooling assembly in an even more compact manner such that overall space may be reduced. Moreover, the inlet port and the outlet port are particularly well accessible for connecting a piping system.

In an example, the inter-cell coolant channel is made of metal material or a plastics material. In an example, the inter-cell coolant channel may comprise aluminum material. Thus, the weight of the inter-cell coolant channel may be further reduced. The inter-cell coolant channel may be produced using an extrusion process.

According to a third aspect, there is provided a battery assembly for a vehicle. The battery assembly comprises:
- at least one cooling assembly according to the second aspect, and
- a plurality of battery cells arranged in a plurality of rows,
   wherein the inter-cell coolant channel of the at least one cooling assembly is positioned between two adjacent rows of battery cells.

In this context, a plurality of rows may be understood that the plurality of battery cells are positioned along at least two parallel lines. The at least one inter-cell coolant channel positioned between the two adjacent rows of battery cells may lead to an efficient heat dissipation away from the plurality of battery cells. This is because the heat may dissipate from the two adjacent rows simultaneously. This increases the overall cooling efficiency and reduces the risk of the plurality of battery cells to overheat. Further, by placing the inter-cell coolant channel between the at least two adjacent rows of battery cells, space may be saved as no separate cooling units are required. Thus, the battery assembly may be compact. Moreover, the weight of the battery assembly may be reduced because less material is needed.

In an example, the plurality of battery cells may be cylindrical battery cells. In another example, the plurality of battery cells may be prismatic battery cells. In still another example, the plurality of battery cells may be blade cells. In a further example, the plurality of battery cells may be pouch cells.

According to a fourth aspect, there is provided a vehicle. The vehicle comprises a battery assembly according to the third aspect. The inter-cell coolant channel of the at least one cooling assembly extends in a longitudinal direction of the vehicle. Additionally or alternatively, the connector of the at least one cooling assembly is arranged in the front of the plurality of battery cells or in the rear of the battery cells with respect to the longitudinal direction of the vehicle. The at least one cooling assembly extending in a longitudinal direction may allow an alignment that may be easy to be integrated into the architecture of the vehicle. Thus, space for other components may be created. Furthermore, the structural integrity of the vehicle may be improved because the at least one cooling assembly may serve as a stabilizing element. Alternatively, the inter-cell coolant channel of the at least one cooling assembly extends in a lateral direction of the vehicle. Additionally or alternatively, the connector of the at least one cooling assembly is arranged at a lateral side of the plurality of battery cells. The at least one cooling assembly extending in a lateral direction may increase the safety of the vehicle in case of external loads acting in a lateral direction on the vehicle and, thus, on the battery assembly. Therefore, the at least one cooling assembly may serve as a stabilizing element.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle having four battery assemblies according to the present disclosure, wherein each battery assembly comprises a battery cooling system including a cooling assembly according to the present disclosure, wherein the cooling assembly comprises a connector according to the present disclosure,
- Figure 2: shows the four battery assemblies of Figure 1 in a more detailed view,
- Figure 3: shows a detail of the battery assembly of Figure 2 as seen from a perspective III,
- Figure 4: shows a sectional view along plane IV of the battery assembly of Figure 3,
- Figure 5: shows a detail of another example of the battery assembly seen from a perspective corresponding to perspective V in Figure 3, and
- Figure 6: shows a sectional view along plane VI of the battery assembly of Figure 5.

### DETAILED DESCRIPTION

The Figures are merely schematic representations and serve only to illustrate examples of the disclosure. Identical or equivalent elements are in principle provided with the same reference signs.

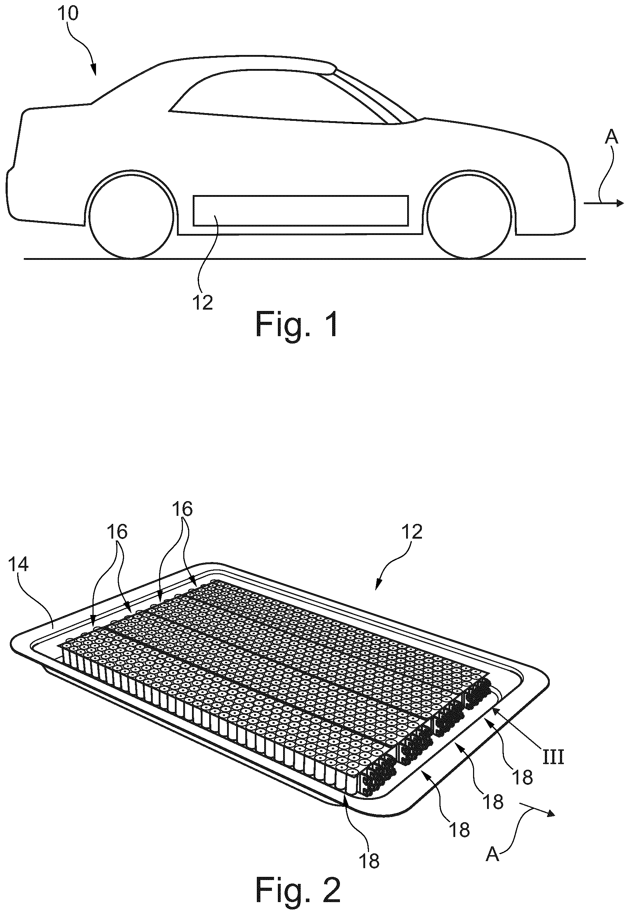

Figure 1 shows a vehicle 10 that comprises a battery system 12 that can also be called a battery pack.

The battery system 12 is part of a drive unit. The energy stored in the battery system 12 may be used to power the vehicle 10. Thus, in the present example, the vehicle 10 is a battery electric vehicle.

The battery system 12 comprises a pan-shaped bottom part 14 and a top part (not shown) covering the bottom part 14. The bottom part 14 and the top part (not shown) form an enclosure or housing of the battery system 12.

In the present example, the battery system 12 further comprises four battery assemblies 16.

The four battery assemblies 16 are located in the pan-shaped bottom part 14.

Each battery assembly 16 comprises a plurality of battery cells 18.

In the present example of Figures 2, 3 and 4, the plurality of battery cells 18 are cylindrical battery cells.

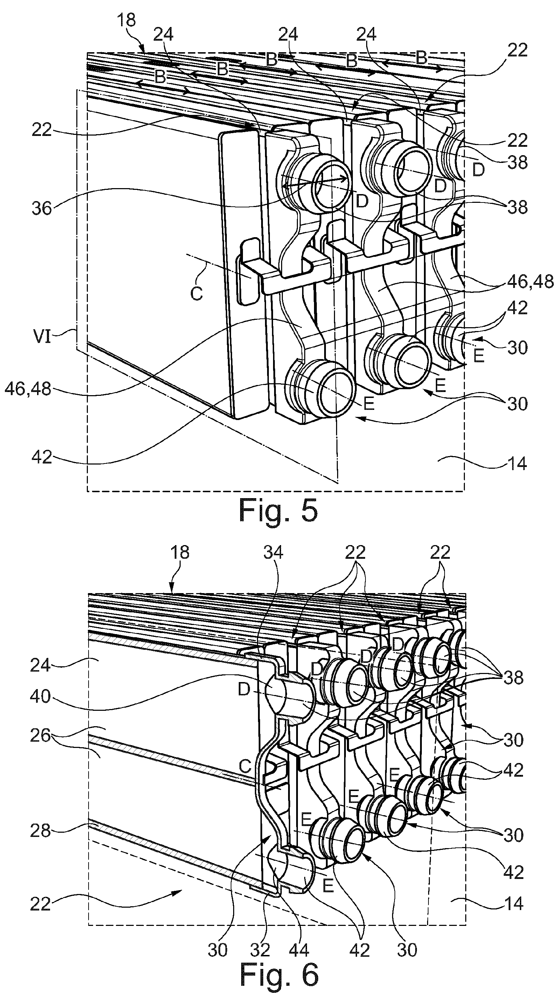

In another example shown in Figures 5 and 6, the plurality of battery cells 18 are prismatic battery cells.

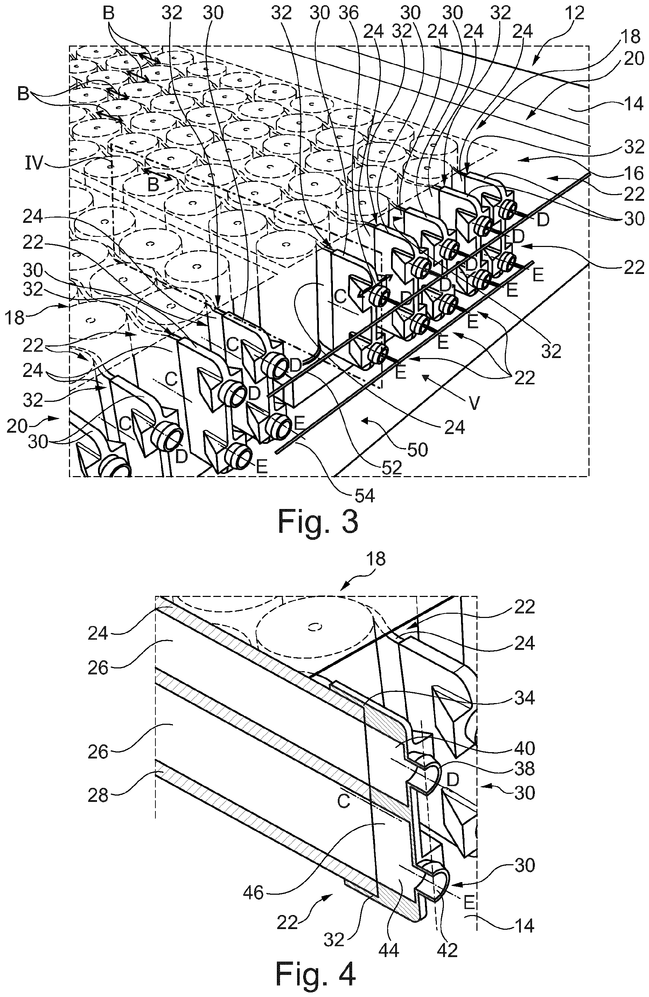

In the present example, the plurality of battery cells 18 are arranged along six parallel lines. In other words, the plurality of battery cells 18 are arranged in six rows (see Figures 2 and 3).

Each of the battery cell rows extends in a longitudinal direction A of the vehicle 10.

Each battery assembly 16 further comprises a battery cooling system 20.

In the present example, each battery cooling system 20 comprises five cooling assemblies 22.

Each cooling assembly 22 comprises an inter-cell coolant channel 24.

Each inter-cell coolant channel 24 has a direction of principal extension B.

In the present example, each inter-cell coolant channel 24 is positioned between two adjacent rows of battery cells. In more detail, the direction of principal extension B of each inter-cell coolant channel 24 extends in a longitudinal direction A of the vehicle 10.

In the present example, each inter-cell coolant channel 24 comprises a cooling channel 26 formed by an associated cooling body 28 of the inter-cell coolant channel 24.

Each cooling assembly 22 further comprises a connector 30.

The connector 30 is arranged in the front of the plurality of battery cells 18, when considering the longitudinal direction of the vehicle 10.

The connector 30 comprises a connection interface 32 (see Figures 4 and 6).

The connection interface 32 is configured to fluidically connect the connector 30 to the inter-cell coolant channel 24.

This can be understood that the connection interface 32 is fluidically connected to the inter-cell coolant channel 24.

The connection interface 32 comprises a slot-shaped opening 34 for receiving an end portion of the inter-cell coolant channel 24 (see Figures 4 and 6).

The connection interface 32 has a connection interface middle axis C. This connection interface middle axis C is oriented perpendicular to the slot-shaped opening 34 and extends through a center of the slot-shaped opening 34.

Moreover, a width 36 of the connector 30 extends perpendicularly to a principal extension of the slot-shaped opening 34 and in parallel to a width of the slot-shaped opening 34.

In the present example, a largest width 36 of the connector 30 is smaller than 50mm.

The connector 30 further comprises an inlet port 38.

The inlet port 38 is configured to supply coolant to the connector 30.

The inlet port 38 is fluidically connected to the connection interface 32 via an interior of the connector 30.

More precisely, the inlet port 38 is fluidically connected to the connection interface 32 via an inlet chamber 40.

A largest cross section of the inlet chamber 40 is larger than a cross section of the inlet port 38.

Figures 3 and 4 show a first alternative, wherein the inlet chamber 40 has a wedged shape.

Figures 5 and 6 show a second alternative, wherein the inlet chamber 40 has a conical shape.

The inlet port 38 has an inlet port middle axis D.

In the present example, the inlet port middle axis D and the connection interface middle axis C extend in parallel. This means that the inlet port middle axis D and the connection interface middle axis C enclose an angle of 0°.

Further, in the present example, the inlet port middle axis D and the direction of principal extension B of the inter-cell coolant channel 24 extend in parallel. This means that the inlet port middle axis D and the direction of principal extension B enclose an angle of 0°.

The connector 30 further comprises an outlet port 42.

The outlet port 42 is configured to discharge coolant from the connector 30.

The outlet port 42 is fluidically connected to the connection interface 32 via an interior of the connector 30.

More precisely, the outlet port 42 is fluidically connected to the connection interface 32 via an outlet chamber 44.

A largest cross section of the outlet chamber 44 is larger than a cross section of the outlet port 42.

Figures 3 and 4 show a first alternative, wherein the outlet chamber 44 has a wedged shape.

Figures 5 and 6 show a second alternative, wherein the outlet chamber 44 has a conical shape.

The outlet port 42 has an outlet port middle axis E.

In the present example, the outlet port middle axis E and the connection interface middle axis C extend in parallel. This means that the outlet port middle axis E and the connection interface middle axis C enclose an angle of 0°.

Further, in the present example, the outlet port middle axis E and the direction of principal extension B of the inter-cell coolant channel 24 extend in parallel. This means that the outlet port middle axis E and the direction of principal extension B enclose an angle of 0°.

The outlet port 42 and the inlet port 38 are arranged on a same side of the connector 30.

The connector 30 further comprises an outer surface portion 46.

The outer surface portion 46 extends between the inlet port 38 and the outlet port 42 (see Figure 3).

In an alternative shown in Figures 5 and 6, the outer surface portion 46 comprises a depression 48 which partially receives a busbar configured for connecting adjacent battery cells 18.

The battery cooling system 20 further comprises a piping system 50.

In the present example, the piping system 50 is represented schematically only and fluidically connected to each of the five cooling assemblies 22 of the battery assembly 16.

In more detail, the piping system 50 comprises a coolant supply channel 52, which is schematically shown in Figure 3.

In the present example, the coolant supply channel 52 is fluidically connected to the inlet port 38 of each connector 30.

The piping system 50 further comprises a coolant discharge channel 54, which is schematically shown in Figure 3.

In the present example, the coolant discharge channel 54 is fluidically connected to the outlet port 42 of each connector 30.

It is noted that it is also possible that the piping system 50 is connected to all cooling assemblies 22 of the battery system 12, i.e. to all inlet ports 38 and all outlet ports 42 provided within the battery system 12.

Thus, when in operation, coolant may flow from the coolant supply channel 52 into each of the connected inlet ports 38. From there, the coolant is guided through the respective inlet chambers 40 to the connection interface 32, where the coolant is directed into the inter-cell coolant channel 24.

The inter-cell coolant channels 24 comprise a cooling channel 26 having two portions extending substantially in parallel. Thus, the coolant is directed into a first portion of the cooling channel 26 and is guided substantially along the entire length of the inter-cell coolant channel 24 along the direction B of principal extension. At an end of the inter-cell coolant channel 24 which is located opposite the end adjacent to the connector 30, the flow of coolant is redirected by a coolant channel end cap which is not shown in the figures. This has the effect that the coolant is guided back towards the connector 30 through the second portion of the cooling channel 26. Consequently, the coolant may enter the outlet chamber 44 via the connection interface 32. From there, it can travel through the outlet port 42 into the coolant discharge channel 54. Thereby, the coolant may take up heat generated in the battery cells 18 and may transfer this heat to a heat exchanger not shown in the figures such that the heat may be withdrawn from the battery system 12.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery system
- 14: bottom part
- 16: battery assembly
- 18: plurality of battery cells
- 20: battery cooling system
- 22: cooling assembly
- 24: inter-cell coolant channel
- 26: cooling channel
- 28: cooling body
- 30: connector
- 32: connection interface
- 34: opening
- 36: width
- 38: inlet port
- 40: inlet chamber
- 42: outlet port
- 44: outlet chamber
- 46: outer surface portion
- 48: depression
- 50: piping system
- 52: coolant supply channel
- 54: coolant discharge channel

- A: longitudinal direction
- B: direction of principal extension
- C: connection interface middle axis
- D: inlet port middle axis
- E: outlet port middle axis

## Claims

1. A connector (30) for fluidically connecting an inter-cell coolant channel (24) to a piping system (50) of a battery cooling system (20) for a vehicle (10), the connector (30) comprising:
- a connection interface (32) for fluidically connecting the connector (30) to the inter-cell coolant channel (24),
- an inlet port (38) for supplying coolant to the connector (30), wherein the inlet port (38) is fluidically connected to the connection interface (32), and
- an outlet port (42) for discharging coolant from the connector (30), wherein the outlet port (42) is fluidically connected to the connection interface (32),
wherein the inlet port (38) and the outlet port (42) are arranged on a same side of the connector (30).

2. The connector (30) of claim 1, wherein the inlet port (38) is fluidically connected to the connection interface (32) via an inlet chamber (40) and/or wherein the outlet port (42) is fluidically connected to the connection interface (32) via an outlet chamber (44).

3. The connector (30) of claim 2, wherein a largest cross section of the inlet chamber (40) is larger than a cross section of the inlet port (38) and/or wherein a largest cross section of the outlet chamber (44) is larger than a cross section of the outlet port (42).

4. The connector (30) of any one of claims 2 or 3, wherein the inlet chamber (40) has a conical shape or a wedged shape and/or wherein the outlet chamber (44) has a conical shape or a wedged shape.

5. The connector (30) of any one of the preceding claims, further comprising an outer surface portion (46) extending between the inlet port (38) and the outlet port (42), wherein the outer surface portion (46) comprises a depression (48).

6. The connector (30) of any one of the preceding claims, wherein the inlet port (38) has an inlet port middle axis (D) and wherein the connection interface (32) has a connection interface middle axis (C), and wherein the inlet port middle axis (D) and the connection interface middle axis (C) enclose an angle of 45° or less and/or
wherein the outlet port (42) has an outlet port middle axis (E) and wherein the connection interface (32) has a connection interface middle axis (C), and wherein the outlet port middle axis (E) and the connection interface middle axis (C) enclose an angle of 45° or less.

7. The connector (30) of claim 6, wherein the inlet port middle axis (D) and the connection interface middle axis (C) enclose an angle of 30° or less and/or
wherein the outlet port middle axis (E) and the connection interface middle axis (C) enclose an angle of 30° or less.

8. The connector (30) of claim 6 or 7, wherein the inlet port middle axis (D) and the connection interface middle axis (C) extend in parallel and/or wherein the outlet port middle axis (E) and the connection interface middle axis (C) extend in parallel.

9. The connector (30) of any one of the preceding claims, wherein the connection interface (32) comprises a slot-shaped opening (34) for receiving an end portion of the inter-cell coolant channel (24).

10. The connector (30) of claim 9, wherein a width (36) of the connector (30) extends perpendicularly to a principal extension of the slot-shaped opening (34) and in parallel to a width of the slot-shaped opening (34), wherein a largest width (36) of the connector (30) is smaller than 50mm.

11. A cooling assembly (22) for a battery cooling system (20) for a vehicle (10), the cooling assembly (22) comprising:
- a connector (30) of any one of claims 1 to 10, and
- an inter-cell coolant channel (24), wherein the inter-cell coolant channel (24) is fluidically connected to the connection interface (32) of the connector (30).

12. The cooling assembly (22) of claim 11, wherein the inlet port (38) has an inlet port middle axis (D) and wherein the inter-cell coolant channel (24) has a direction of principal extension (B), and wherein the inlet port middle axis (D) and the direction of principal extension (B) enclose an angle of 45° or less and/or
wherein the outlet port (42) has an outlet port middle axis (E) and wherein the inter-cell coolant channel (24) has a direction of principal extension (B), and wherein the outlet port middle axis (E) and the direction of principal extension (B) enclose an angle of 45° or less.

13. The cooling assembly (22) of claim 12, wherein the inlet port middle axis (D) and the direction of principal extension (B) extend in parallel and/or wherein the outlet port middle axis (E) and the direction of principal extension (B) extend in parallel.

14. A battery assembly (16) for a vehicle (10), the battery assembly (16) comprising:
- at least one cooling assembly (22) according to any one of claims 11 to 13, and
- a plurality of battery cells (18) arranged in a plurality of rows,
wherein the inter-cell coolant channel (24) of the at least one cooling assembly (22) is positioned between two adjacent rows of battery cells.

15. A vehicle (10) comprising a battery assembly (16) according to claim 14,
wherein the inter-cell coolant channel (24) of the at least one cooling assembly (22) extends in a longitudinal direction (A) of the vehicle (10) and/or wherein the connector (30) of the at least one cooling assembly (22) is arranged in the front of the plurality of battery cells (18) or in the rear of the battery cells with respect to the longitudinal direction (A) of the vehicle (10) or
wherein the inter-cell coolant channel (24) of the at least one cooling assembly (22) extends in a lateral direction of the vehicle (10) and/or wherein the connector (30) of the at least one cooling assembly (22) is arranged at a lateral side of the plurality of battery cells (18).

## Amended claims

### Amended claims in accordance with Rule 137(2) EPC.

1. A connector (30) for fluidically connecting an inter-cell coolant channel (24) to a piping system (50) of a battery cooling system (20) for a vehicle (10), the connector (30) comprising:
- a connection interface (32) for fluidically connecting the connector (30) to the inter-cell coolant channel (24),
- an inlet port (38) for supplying coolant to the connector (30), wherein the inlet port (38) is fluidically connected to the connection interface (32), and
- an outlet port (42) for discharging coolant from the connector (30), wherein the outlet port (42) is fluidically connected to the connection interface (32),
wherein the inlet port (38) and the outlet port (42) are arranged on a same side of the connector (30),
wherein the inlet port (38) has an inlet port middle axis (D) and wherein the connection interface (32) has a connection interface middle axis (C), and wherein the inlet port middle axis (D) and the connection interface middle axis (C) enclose an angle of 45° or less and/or
wherein the outlet port (42) has an outlet port middle axis (E) and wherein the connection interface (32) has a connection interface middle axis (C), and wherein the outlet port middle axis (E) and the connection interface middle axis (C) enclose an angle of 45° or less.

2. The connector (30) of claim 1, wherein the inlet port (38) is fluidically connected to the connection interface (32) via an inlet chamber (40) and/or wherein the outlet port (42) is fluidically connected to the connection interface (32) via an outlet chamber (44).

3. The connector (30) of claim 2, wherein a largest cross section of the inlet chamber (40) is larger than a cross section of the inlet port (38) and/or wherein a largest cross section of the outlet chamber (44) is larger than a cross section of the outlet port (42).

4. The connector (30) of any one of claims 2 or 3, wherein the inlet chamber (40) has a conical shape or a wedged shape and/or wherein the outlet chamber (44) has a conical shape or a wedged shape.

5. The connector (30) of any one of the preceding claims, further comprising an outer surface portion (46) extending between the inlet port (38) and the outlet port (42), wherein the outer surface portion (46) comprises a depression (48).

6. The connector (30) of any one of the preceding claims, wherein the inlet port middle axis (D) and the connection interface middle axis (C) enclose an angle of 30° or less and/or
wherein the outlet port middle axis (E) and the connection interface middle axis (C) enclose an angle of 30° or less.

7. The connector (30) of any one of the preceding claims, wherein the inlet port middle axis (D) and the connection interface middle axis (C) extend in parallel and/or wherein the outlet port middle axis (E) and the connection interface middle axis (C) extend in parallel.

8. The connector (30) of any one of the preceding claims, wherein the connection interface (32) comprises a slot-shaped opening (34) for receiving an end portion of the inter-cell coolant channel (24).

9. The connector (30) of claim 8, wherein a width (36) of the connector (30) extends perpendicularly to a principal extension of the slot-shaped opening (34) and in parallel to a width of the slot-shaped opening (34), wherein a largest width (36) of the connector (30) is smaller than 50mm.

10. A cooling assembly (22) for a battery cooling system (20) for a vehicle (10), the cooling assembly (22) comprising:
- a connector (30) of any one of claims 1 to 9, and
- an inter-cell coolant channel (24), wherein the inter-cell coolant channel (24) is fluidically connected to the connection interface (32) of the connector (30).

11. The cooling assembly (22) of claim 10, wherein the inlet port (38) has an inlet port middle axis (D) and wherein the inter-cell coolant channel (24) has a direction of principal extension (B), and wherein the inlet port middle axis (D) and the direction of principal extension (B) enclose an angle of 45° or less and/or wherein the outlet port (42) has an outlet port middle axis (E) and wherein the inter-cell coolant channel (24) has a direction of principal extension (B), and wherein the outlet port middle axis (E) and the direction of principal extension (B) enclose an angle of 45° or less.

12. The cooling assembly (22) of claim 11, wherein the inlet port middle axis (D) and the direction of principal extension (B) extend in parallel and/or wherein the outlet port middle axis (E) and the direction of principal extension (B) extend in parallel.

13. A battery assembly (16) for a vehicle (10), the battery assembly (16) comprising:
- at least one cooling assembly (22) according to any one of claims 10 to 12, and
- a plurality of battery cells (18) arranged in a plurality of rows, wherein the inter-cell coolant channel (24) of the at least one cooling assembly (22) is positioned between two adjacent rows of battery cells.

14. A vehicle (10) comprising a battery assembly (16) according to claim 13,
wherein the inter-cell coolant channel (24) of the at least one cooling assembly (22) extends in a longitudinal direction (A) of the vehicle (10) and/or wherein the connector (30) of the at least one cooling assembly (22) is arranged in the front of the plurality of battery cells (18) or in the rear of the battery cells with respect to the longitudinal direction (A) of the vehicle (10) or
wherein the inter-cell coolant channel (24) of the at least one cooling assembly (22) extends in a lateral direction of the vehicle (10) and/or wherein the connector (30) of the at least one cooling assembly (22) is arranged at a lateral side of the plurality of battery cells (18).
